# EUROPÄISCHE PATENTSCHRIFT

(11) **EP 2 672 574 B1**
(45) Veröffentlichungstag und Bekanntmachung des Hinweises auf die Patenterteilung: **16.09.2015**
(21) Anmeldenummer: 13002953.1
(22) Anmeldetag: 07.06.2013
(51) Int. Cl.: H01R 13/58, H01R 13/633, H01R 103/00, H01R 24/30

(54) **Komfort-Flachstecker**
Convenient flat connector
Connecteur plat pratique

(30) Priorität: 10.06.2012 DE 202012006667 U
(43) Veröffentlichungstag der Anmeldung: 11.12.2013
(73) Patentinhaber: Hidde, Axel R., 57076 Siegen (DE); Klose, Odo, 42285 Wuppertal (DE)
(72) Erfinder: Hidde, Axel R., 57076 Siegen (DE); Klose, Odo, 42285 Wuppertal (DE)

(56) Entgegenhaltungen:
- EP-A1- 1 071 169
- WO-A1-96/23333
- DE-U1- 29 700 897
- GB-A- 2 475 051
- US-A- 5 679 014

## Beschreibung

Die Erfindung betrifft einen Komfort-Flachstecker - insbesondere einen Netzstecker für die Haushalts- und Werkstattgerätetechnik in flacher Ausführung, mit Bedienkomfort und ausgelegt auch für mehrfach angeordnete Steckdosen.

Netzstecker der hier angesprochenen Art sind gemäß einer Veröffentlichung des US-Handelsministeriums bekannt unter
- Stecker-Typ C, CEE 7/16, Euro-Stecker, ohne Schutzleiter (PE)
- Stecker-Typ C, CEE 7/17, Konturenstecker, ohne Schutzleiter
- Stecker-Typ E, CEE 7/5, mit Schutzleiter
- Stecker-Typ F, CEE 7/4, Schutzkontakt-Stecker, mit Schutzleiter
- Stecker Typ E + F, CEE 7/7, Kombinationsstecker, mit Schutzleiter.

Mit ihnen können Geräte - überwiegend Haushalts- und Werkstattgeräte - der Schutzklasse I (mit Schutzleiteranschluß) und Schutzklasse II (ohne Schutzleiteranschluß) an das überwiegend 240 V (-10% ... +5%)/50 Hz-Stromnetz angeschlossen werden. Die nichtwiederanschließbaren Stecker sind mit dem Anschlußkabel vollflächig umspritzt; die wiederanschließbaren Stecker besitzen ein meist hohlzylinderförmiges Isolierstoffgehäuse mit Schraub- oder Federsteckklemmenanschluß für Strom-, Null- und ggf. Schutzleiteranschluß und haben eine ausgeprägte Zugentlastung für das Anschlußkabel. Die Anschlußkabel sind üblicherweise parallel zu den Steckerkontakten in axialer Richtung aus dem Steckergehäuse geführt; es sind aber auch Stecker mit seitlicher, in radialer Richtung verlaufender Kabeleinführung am Markt erhältlich.

Auf Grund vieler Anforderungen erscheinen die Steckergehäuse relativ großvolumig
- es sind Kontaktabstände - wie Luft- und Kriechstrecken - einzuhalten
- der Abstand zum Schutzleiter ist zu gewährleisten
- der Installationsraum - oft nur einmal benötigt - muß gut zugänglich sein
- der Anschlußraum muß die längere PE-Leitung aufnehmen
- die Anschlußkontakte müssen den Steck- oder Anschraubkräften standhalten
- das Steckergehäuse muß mechanisch verriegelt und elektrisch isoliert sein
- das Steckergehäuse darf nur mittels eines Werkzeugs zu öffnen sein
- oft verbindet eine Zylinderschraube die beiden Gehäusehälften.

Ein Teil des Steckergehäuses taucht in gestecktem Zustand in die Steckeraufnahme der Steckdose ein, aber ein großer Teil des Steckers bzw. des Steckergehäuses ragt aus der Steckdose vor, sowohl bei axialer als auch bei radialer Kabeleinführung. Bei axialer Kabeleinführung besteht noch ein größerer Freiraumbedarf um die Steckdose, da der Biegeradius des Anschlußkabels sich zum Wandabstand addiert.
Wird jedoch andererseits versucht, das Anschlußvolumen des Steckergehäuses bis auf Normvorgaben zu minimieren,
- gestaltet sich einerseits die Handhabung des Kabelanschlusses schwierig und
- andererseits artet die manuelle Bedienung dahingehend aus, daß eine Trennung des Steckers mit der Steckdose nur ganz schwierig zu vollziehen ist, da das überragende Steckergehäuse des steckdosengesteckten Steckers zuwenig Greifvolumen bietet und dann der Stecker über das Anschlußkabel und die Zugentlastung unzulässig aus der Steckdose entfernt wird.
Im folgenden wird der Stand der Technik von Komfort-Flachsteckern - insbesondere von Netzsteckern für die Haushalts- und Werkstattgerätetechnik in flacher Ausführung, mit Bedienkomfort und ausgelegt auch für mehrfach angeordnete Steckdosen - gewürdigt; gemäß dem Stand der Technik sind, je nach Anwendungsbezug, eine Vielzahl von Typen von Komfort-Flachsteckern - insbesondere von Netzsteckern für die Haushaltsgerätetechnik in flacher Ausführung, mit Bedienkomfort, ausgelegt auch für mehrfach angeordnete Steckdosen im Einsatz.
Die Patentschrift DE 871 912 stellt einen drei- oder mehrpoligen Stecker mit seitlichem Schutzkontakt und senkrecht zu den Steckerstiften angeordneter Kabeleinführung vor, bei dem das die Steckerstifte und die Anschlußklemmen tragende Unterteil von einer deckelartigen Kappe abgedeckt ist, wobei die für das Kabel an der Längsseite des Unterteils gegenüber den Anschlußklemmen angeordnete Zugentlastungseinrichtung gemeinsam mit dem Schutzkontakt auf einem oder mehreren die Steckerstifte bzw. Klemmenverbindungsschiene überragenden Pfosten im Innern des Gehäuses befestigt ist.
Das Steckergehäuseoberteil füllt etwa das 2-fache Volumen des Steckerunterteils, welches bei gestecktem Stecker die Steckeraufnahme der Steckdose abdeckt. Mit entsprechendem Überstand steht der Deckel des Oberteils über Wand- bzw. Rahmenebene der Steckdose.
Gemäß der europäischen Patentschrift EP 1 071 169 'Electrical Plug Device' , die als nächstliegender Stand der Technik angesehen wird, wird ein 3-poliger Stecker für eine Schutzkontakt (Schuko)-Steckdose sowie ein 2-poliger Stecker für eine Standard-Steckdose vorgestellt. Die Besonderheit stellt ein als Hebel ausgebildeter Bügel dar, der die Entnahme des Steckers aus der Steckdose erleichtern soll. Auffallend ist, daß der Bügel des Steckers für die Schutzkontakt-Steckdose diagonal angeordnet ist je zwischen einerseits einem Schutzkontakt und andererseits einer Führungslippe, wohl den konstruktiven Gegebenheiten wie denen der Einhaltung der Luft- und Kriechstrecken Rechnung tragend. Eine weitere Besonderheit ist, daß der Drehpunkt des Bügels asymmetrisch angeordnet ist. Beide Besonderheiten - insbesondere bei der Schuko-Version - führen dazu, daß die bei Betätigung des Bügels übersetzten Hebel-Kräfte sich nicht nur in Richtung auf die axiale Kontaktstift-Ausdehnung auswirken, sondern auch Kraftanteile senkrecht dazu besitzen, die mit weiter abziehendem Bügel/Hebel größer werden.
Diese Kraftanteile führen bei gestecktem Stecker dazu, daß sich sowohl die Steckstifte in ihrer Aufnahme als auch - zumindest beim Schuko-Stecker - die Lippen in ihrer Führung verkanten und die - an und für sich - helfende Entnahme-Eigenschaft zunichte machen. Das Wandern des Punktes des Kraftschlusses zwischen dem Bügel/Hebel und der stützenden Steckdosen-Oberfläche wird in den Figuren Fig. 5 und Fig. 6 besonders deutlich.

Die Gebrauchsmusterschrift DE 20 2004 010 863 zeigt einen um gegenüber den Kontaktstiften um 90°-abgewinkelten vollumspritzten Stecker für Haushalt und Werkstatt. Das Innengestell besteht aus einer Scheibe als Hauptkörper aus Kunststoff mit zwei nach vorne ragenden Kontaktstiften mit rückwärtigem Anschluß sowie einer mittigen nach hinten weisenden schachtartigen Vertiefung zur Aufnahme der Steckbuchse des metallenen Schutzleiter- und Erdungsbügels, wobei die Steckbuchse den Erdungsstift der anzuschließenden Steckdose aufnehmen kann. Dem gegenüber besitzt die Scheibe eine weitere rechteckige Aussparung, die der Aufnahme des Schutzleiter- und Erdungsbügels dient, der an dieser Stelle einen ebenfalls nach hinten weisenden Kontaktanschluß besitzt. Auf der den Kontaktstiften abgewandten Seite der Scheibe bildet sich neben der schachtartigen Vertiefung der Kabelanschlußraum des Winkelsteckers. Die so bestückte Scheibe - ergänzt um eine Kabelzugentlastung - läßt sich jedoch auch als Baugruppe in ein hohlzylinderförmiges Gehäuse einbringen.
Der um 90°-abgewinkelte Kabelanschluß des umspritzten Steckers steht bei gestecktem Stecker aus der Steckdose hervor und bildet den Griffkörper für die Handhabung desselben. Das wandbündige Aufstellen von Möbeln oder Geräten ist nur unter Berücksichtigung des Steckdosen-/Stecker-Überstands möglich.

Gemäß der Offenlegungsschrift DE 10 2004 022 189 wird eine elektrische Schutzkontaktsteckdose für den Unterputzeinbau mit einem gegenüber der herkömmlichen Schutzkontaktsteckdose vertieften Steckertopf vorgeschlagen. Die erfindungsgemässe Steckdose mit vertieftem Steckertopf soll den eingesteckten Stecker mit abgewinkeltem Kabelanschluß in voller Höhe in sich aufnehmen, so daß wandseitig zwischen Abdeckrahmenoberfläche und Steckeranschlußseite Bündigkeit herrscht. Zwecks Handhabung des Steckers wird ein flexibler Griff oder Bügel vorgeschlagen, der auch der Kindersicherung dient. Der Steckerkabelanschluß verläuft demnach in einer Aussparung des Abdeckrahmens.
Es ist schwer vorstellbar, daß die Industrienorm 'Schutzkontaktsteckdose' mit unzähligen, weltweit installierten Anschlüssen wegen einer speziellen Installation fällt; es muß schon nach einer die Kompatibilität wahrenden Problemlösungen gesucht werden.

Gemäß der Patentschrift DE 10 2007 045 400 wird ein flachbauender Netzstecker vorgeschlagen, dessen Anschlußraum nach außerhalb des Abdeckrahmens der Steckdose verlegt worden ist, wobei der Steckerteil des Steckers mit den Steckerstiften und der außenliegende Kabelanschlußraum über Kontaktbleche miteinander verbunden sind, die im Anschlußraum mit Schraubklemmen versehen sind. Das Stekkerteil und eine Platte bilden den Grundkörper, der rückseitig, auf der wandabgewandten Seite mit einem Deckel verschlossen ist. Im Bereich des Anschlußraums kommt wandseitig zusätzlich eine isolierende Abdeckung mit Kabelzugentlastung zum Einsatz. Die Steckerbauhöhe außerhalb der Steckdosenaufnahme der Steckdose wird bestimmt durch die Höhe des Aufbaus oder die Dicke der Kunststoffplatte mit den eingelegten Kontaktblechen und der Dicke des Kunststoffdeckels im Bereich des Abdeckrahmens der Steckdose und liegt im Bereich von ca. 5 mm. Weitere Ausführungsformen zeigen, daß der Kabelanschlußraum zu einem Kabeleinführungsraum reduziert, wobei die Anschlußdrähte an Stelle der Kontaktbleche bis zu den um Anschlußklemmen ergänzten Kontaktstiften geführt sind. Eine weitere Ausführungsform zeigt die Steckervariante mit umspritztem, nichtwiederanschließbarem Stecker. Durch die Dimensionierung des Steckers über die Rahmenmaße der Steckdose kommen bei Einsatz einer Mehrfach-Kombination nur die außenliegenden Steckdosen als Steckplätze in Frage. Die Führung des Anschlußkabels ist ausnahmslos 90°-abgewinkelt nach unten gerichtet. Der Stecker kann - ohne zu Verkanten - nur achsparallel zu den Kontaktstiften gesteckt und gezogen werden; beim Ziehen ist eine Hilfsvorrichtung mittels eines Griffs oder einer Lasche notwendig. Ein Hebeln zwecks Steckerentnahme an der Kabelanschlußstelle läßt den Grundkörper am oberen Steckdosenrahmen angreifen und führt nur zum Verkanten und Verspannen des Grundkörpers.

Die französische Anmeldung FR 2 641 651 widmet sich in mehreren Beispielen des mechanisch unterstützten Ziehens von elektrischen Haushalts-Gerätesteckern aus Steckdosen. Vorgesehen ist die Einleitung von
a) einerseits die Trennung bewirkende Druckkraft direkt oder indirekt über einen Mechanismus des Steckers auf die Steckdose und
b) andererseits Zugkraft auf einen Schenkel eines in Höhe der Kontaktstifte gelagerten äußeren Hebels, dessen abgewinkelter anderer Schenkel einen die Trennung bewirkenden Druck zwischen Stecker und Steckdose ausübt.

Zu a) Das Steckerinnere um einen Druckstift o.ä. zu ergänzen hat zur Folge, daß der Stecker wiederholt auf Einhaltung gültiger elektrischer Normen geprüft und zertifiziert werden muß; es ist zwingend auf die Einhaltung von Abständen, Luft- und Kriechstrecken zu achten. Eine nicht mittig zu den Kontaktstiften gelagerte Aushebeeinrichtung führt zu Verklemmungen beim Löseversuch. Bei Aushebevorrichtungen für Stecker Typ E-Steckdosen mit vorstehendem Erdungs- oder Schutzleiterstift, die auf denselben wirken, weisen unter Druck eine asymmetrische Kraftverteilung auf - der Stecker verklemmt in der Steckeraufnahme der Steckdose beim Entnahmeversuch. Bei derartigen Anordnungen kollidiert meist der bei den Steckertypen E + F notwendige Erdungs- oder Schutzleiterbügel mit einer solchen Aushebeeinrichtung.

Zu b) Ein außen z.B. an einem Winkelstecker parallel zum Kabelanschluß aufgesetzter Hebel, dessen vom Kabel abgewandter Schenkel sich über einen 90°-Bogen auf dem Rahmen abstützt und dessen anderer Schenkel als manuell zu bedienender Zuggriff ausgeprägt ist, muß bei gestecktem Stecker ein Drehlager senkrecht zum Kabelanschluß aufweisen, dessen Drehachse sich in einer von den Kontaktstiften aufgespannten Ebene und parallel zum Topfboden befindet. Bei manueller Betätigung des Zuggriffs verändert die Mittellinie der Drehachse ihre Lage aus der von den Kontaktstiften aufgespannten Ebene weg auf einem Teilzylinder, dessen Radius von dem Abstand der Mittellinie bis zum Abstützpunkt des abgewandten Schenkels gebildet wird. Das Drehachslager muß im Hebel oder im Stecker als Loslager geführt werden, soll sich der Stecker beim Löseversuch nicht mittels der Kontaktstifte und/ oder in der Steckeraufnahme der Steckdose verklemmen. Eine gemäß der Kontaktstiftanordnung zwingend notwendige achsparallele Stecker-/Steckdosenentnahme steht im Widerspruch zu der Lageänderung der Drehachse bei der Hebelbewegung mit einseitiger Aufstützung. Ein Los- oder Verschiebelager zwischen Hebel und Stecker führt zu einer erheblichen Minderung der Wertanmutung der Einrichtung und kann auch zu einem Abrutschen bei der Rahmenaufstützung führen - Vergleich Hebelkorkenzieher.

Offenlegungsschrift DE 10 2006 029 927 stellt einen elastomeren Winkelstecker des Steckertyps F für einen elektrischen Geräteanschluß im Haushalt und in der Werkstatt vor, der eine Einrichtung besitzt, die einen wandabgewandten Zug an einem mit dem Winkelstecker verbundenen Stromkabel derart umsetzt, daß ein Herausdrücken des Winkelsteckers aus der Steckdose bewirkt wird. Wird bei einer umspritzten, mit einem Knickschutz versehenen konventionellen Anschlußstecker-Kombination versucht, den Stecker aus der Steckdose mittels Zugs am Anschlußkabel zu ziehen, verhindert die nicht achsparallel auf die Kontaktstifte wirkende Kraftverteilung den Erfolg dieser Handhabung; beschädigtes Kabel, Stecker oder Steckdose sind die Folge. Die vorliegende Neuerung sieht daher ein im Winkelstecker asymmetrisch gelagertes 90°-Hebelelement vor, dessen einer Schenkel in Richtung Anschlußkabel ausgedehnt ist und dessen zweiter Schenkel achsparallel auf die Bodenfläche der Steckeraufnahme der Steckdose zeigt und die dem gegenüberliegende Steckerkopfabschlußfläche durchdringt und mit dieser - in Ruhestellung - bündig abschließt. Eine kabelanschlußseitige, wandabgewandte Betätigung des Hebels bewirkt eine Drehung und der andere Schenkel tritt aus der Steckerkopfabschlußfläche hervor und wirkt so auf die Steckeraufnahme der Steckdose, daß sich der Winkelstecker aus der Steckdose löst.
Voraussetzung für die Funktion ist eine genaue Krafteinleitung des Hebeldrehpunkts in Höhe der Steckerkontaktstifte, da sonst ein Verkanten oder Verspannen des Stekkers in der Steckdose die Folge ist. Die mechanische Einbringung eines drehbar gelagerten Hebels innerhalb eines elektrischen Winkelsteckers darf die elektrischen Eigenschaften - wie Luft- und Kriechstrecken, etc. - desselben nicht beeinflussen. Neben der geometrischen Lage der Kontaktstifte ist auch die Führung oder die Lage der Schutzleiteranschlüsse oder eines Schutzleiterbügels zu berücksichtigen.

Mit der Offenlegung DE 10 2008 045 191 wird ein flacher Gerätenetzstecker Typ E + F offenbart, der den Mangel der Handhabung des Steckers der Anmeldung DE 10 2007 045 400 beseitigen soll. Das äußere Erscheinungsbild des alten und neuen Steckers entsprechen sich im wesentlichen; die Handhabung einer gemäß der Kontaktstiftanordnung achsparallelen Steckerentnahme wird dadurch erreicht, daß der Steckergrundkörper um ca. 15° aus der Mittenlage nach oben schwenkbar an dem Steckergehäuse mittels Drehlager angeordnet ist. Bei gestecktem Stecker führt ein wandabgewandter Zug am Steckergehäuse im Bereich des Kabelanschlußraums dazu, daß sich das dem Kabelanschlußraum entgegengesetzte Ende des Steckergehäuses einen Ausleger bildend auf dem Abdeckrahmen der Steckdose abstützt, sich das Steckergehäuse bei weiterem Zug aus seiner wandparallelen Lage zu einer Winkellage verändert und über das mitgehende Drehlager sich der Steckergrundkörper mit den Kontaktstiften aus der Steckdose entfernt. Dabei verändert auch das einen Ausleger bildende Ende des Steckergehäuses seine Lage auf dem Abdeckrahmen der Steckdose zu deren Mitte hin um die durch die Drehung erzeugte Längendifferenz zwischen achsparalleler Koordinate und Drehwinkelversatz. Die asymmetrische Anordnung des Steckergehäuses zu den Kontaktstiften mit oberem Ende/Aus-leger zu unterem Ende/Kabelanschlußraum von ca. 3 : 8 , hat gemäß den Hebelgesetzen einen entsprechend geringeren Kraftaufwand für die Steckerentnahme zur Folge. Der Stecker ist für 250 V/16 A ausgelegt.
Der Kabelanschlußraum wird nur für die Zugentlastung genutzt; das Kabel muß abgemantelt und zugentlastet, die Kabeladern im Steckergehäuse geführt und die Adern mit den Kontaktstiften verbunden werden. Die Kabeladern führen die Schwenkbewegungen des Grundkörpers aus. Der Kabelauslaß ist bei senkrechter Steckermontage nach unten. Der Stecker kann wegen seines überstehenden Kabelanschlußraums über die Steckdosenrahmenmaße nur in den Enddosen einer Mehrfach-Steckdosenanordnung kontaktiert werden. Bei abgezogenem Stecker hat der Grundkörper keine Vorzugslage gegenüber dem Steckgehäuse; die Lage wird vielleicht durch die angeschlossenen Kabeladern bestimmt.

Alle vorgestellten Veröffentlichungen eignen sich nur bedingt oder gar nicht für den spezifischen Einsatz als Komfort-Flachstecker - insbesondere nicht als Netzstecker für die Haushalts- und Werkstattgerätetechnik in flacher Ausführung, mit Bedienkomfort und ausgelegt auch für mehrfach angeordnete Steckdosen.

Der Erfindung liegt daher die Aufgabe zu Grunde, eine Einrichtung nach dem Oberbegriff des Anspruchs 1, einen Komfort-Flachstecker - insbesondere einen Netzstecker für die Haushalts- und Werkstattgerätetechnik in flacher Ausführung, mit Bedienkomfort und ausgelegt auch für mehrfach angeordnete Steckdosen zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Ziel ist der Aufbau eines Komfort-Flachsteckers des Typs E oder des Typs F oder des Typs E + F - insbesondere eines Netzsteckers für die Haushalts- und Werkstattgerätetechnik in flacher Ausführung, mit Bedienkomfort und ausgelegt auch für mehrfach angeordnete Steckdosen. Der erfindungsgemäße Komfort-Flachstecker baut nicht über die Ebenenmaße der Abdeckrahmen und auch nicht über die Rastermaße bei Mehrfach-Steckdosenanordnungen, so daß mit dem Stecker jeder Steckplatz einer Kombination kontaktiert werden kann. Ebenso ist die Steckrichtung des Steckers wahlfrei. Der Flachstecker hat bei senkrechter Montage einen Kabelauslaß in drei Richtungen - nämlich nach unten, nach rechts und nach links - so daß das Anschlußkabel auch bei 90°-verdrehten oder schräg montierten Steckdosen knickfrei geführt wird, was besonders bei einer Hinter-Schrank-Montage von Bedeutung ist, da hier die Steckverbindung nicht eingesehen werden kann und damit die Brandlast besonders hoch ist.

Für den Bedienkomfort besitzt der Flachstecker - in einer weiteren Ausgestaltung der Erfindung - einen das Steckergehäuse überragenden hufeisenförmigen drehbar gelagerten Bügel mit einer Griffmulde am oberen Rand und einer Hebelwirkung, mit dessen Hilfe durch wandabgewandten Zug die unterhalb der Drehachse überragenden Schenkelenden des hufeisenförmigen Bügels gegen den Abdeckrahmen der Unterputz-Steckdose drücken und den gesteckten Stecker aus seiner Endlage aushebeln. Das Hebelverhältnis des kurzen Schenkelendes zu dem langen Schenkel ist etwa 1 : 3 , entsprechend steht die Kräfteverteilung im reziproken Verhältnis. Der Hufeisen-Bügel mit Griffmulde macht die Handhabung des Flachsteckers zugänglich und sicher; der sonst übliche hohe Aufbau über dem Stecker-Grundkörper zur Bildung des Griffvolumens entfällt.

In einer weiteren Ausprägungsform der erfinderischen Neuheit ist der Raum innerhalb und unterhalb des hufeisenförmigen Bügels mit einer Abdeckung versehen, die durch rückseitige Befestigung montiert, eine Zugentlastung für den Kabelanschluß bildet. Die wandabgewandte Fläche der Abdeckung läßt sich sehr gut für Beschriftungen, wie Bedienungsanleitungen oder Zertifizierungskennzeichen, oder auch für Werbezwecke, nutzen. Eine zusätzliche Schraubenfeder im Drehgelenk hält den Hufeisen-Bügel auch bei abgezogenem Stecker in Position. Der Stecker-Grundkörper ist mit dem Steckergehäuse rastend verbunden und mittels Werkzeug zu trennen, so daß fertigungsseitig den vielfältigen länderspezifischen Steckverbindungslösungen im Niederspannungsbereich durch Austausch des Grundkörpers Rechnung getragen wird.

Der Gegenstand der Erfindung wird nachfolgend anhand der als Anlage beigefügten Zeichnungen von Ausführungsbeispielen weiter verdeutlicht. Es zeigen
- **Fig. 1**: Flachnetzstecker, perspektivische Darstellung
**a)** in Ruhestellung
**b)** in Entnahmestellung
- **Fig. 2**: Flachnetzstecker mit Steckdose, Seitenansicht
**a)** in Ruhestellung
**b)** in Entnahmestellung
- **Fig. 3**: Flachnetzstecker ohne Abdeckung, in perspektivischer Darstellung
- **Fig. 4**: Flachnetzstecker mit Mehrfach-Steckdosenkombination, in Ruhestellung, Kabelauslaß seitlich (oben) und in Entnahmestellung, Kabelauslaß nach unten (unten).

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

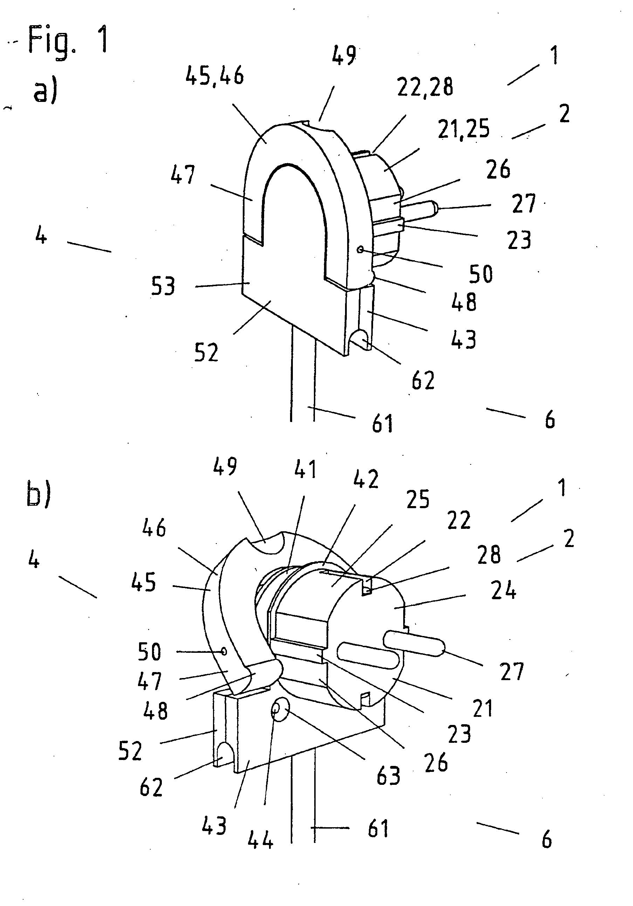

Wie aus **Fig. 1a****)** ersichtlich, besteht der Komfort-Flachnetzstecker **1** aus einem Steckerteil **2** und einem Steckergehäuse **4**. Das Steckerteil besitzt einen hohlzylinderförmigen Grundkörper **21** mit einer Topfwand **25** und einem Topfboden **24**, zwei seitlichen, sich diametral gegenüberstehenden Abflachungen **26**, in die je eine quaderförmige Führung **23** in axialer Richtung aufgesetzt ist. Auf der Höhe der Führungen besitzt das Steckergehäuse zwei in den Topfboden einstückig eingelassene beabstandete Kontakt- oder Steckerstifte **27**, die die 2-phasige elektrische Verbindung zur Steckdose **8** bilden. Die Kontakt- oder Steckerstifte besitzen je an ihrem im Steckerteil liegenden Ende Anschlußklemmen für die Kabeladern des Anschlußkabels des Netzanschlusses. Gegenüber den Führungen im 90°-Versatz befinden sich gegenüberliegend zwei in radialer Richtung ausgebildete Schlitze **22**, die je einen Erdungs- oder Schutzleiterbügel **28** aufnehmen. Der steckdosengesteckte Stecker wird über eine 3-polige elektrische Verbindung herstellende Federkontakte der Steckdose positioniert und mechanisch gehalten. Das so ausgebildete Steckerteil ist als Schutzkontaktstecker vom Typ F ausgeprägt.

Bekanntermaßen sind weltweit weitere Netzstecksysteme für den Anschluß von Leuchten und Elektrogeräten für Haushalt und Werkstatt in Niederspannungs-Wechselstromnetzen bekannt, so daß es sinnvoll erscheint, das länderspezifisch ausgelegte Steckerteil mit Hilfe von Werkzeugen trennbar vom Steckergehäuse zu gestalten, wie z.B. durch eine Rastverbindung. Das Steckerteil **2** setzt sich in dem Steckergehäuse **4** als hohlzylinderförmiges Gehäuseunterteil **41** fort und ist mit diesem einstückig vorzugsweise trennbar verbunden; der Übergang ist durch einen kreisförmigen Anschlag **42** gekennzeichnet. Nach unten setzt sich das Gehäuseunterteil in einer als Rechteck ausgeprägten Platte - genannt Kabelführung **43 -** fort. Diese Kabelführung zeichnet sich auf der wandabgewandten Seite durch viertelkreisförmige Aussparungen als Kabelauslässe für die Kabelführung aus, die sich auch in spiegelsymmetrischer Weise in diesem Bereich auf dem Gegenstück - einer Abdeckung **52 -** wiederfinden und so halbkreisförmige Führungen für das Kabel bilden. Die Abdeckung erstreckt sich nach oben über das Gehäuseunterteil und schließt dieses in der Schutzart IP20 ab. Im unteren Teil besitzt die Kabelführung zwei Senkbohrungen **44** zur Schraubenaufnahme **63** und zur einstückigen Verbindung von Kabelführung, Abdeckplatte und dazwischenliegendem zugentlasteten doppeltgemantelten Netzkabel **61**. Kabelführung und Abdeckplatte bilden einen halbkreisförmigen Kabelkanal, der einen beidseitigen oder nach unten verlaufenden Kabelauslaß möglich macht. Die wandabgewandte Fläche **53** der Abdeckung läßt sich sehr gut für Beschriftungen, wie Bedienungsanleitungen oder Zertifizierungskennzeichen, oder auch für Werbezwecke, nutzen.

Das Gehäuseunterteil **41** wird von einem hufeisenförmigen, drehgelagerten Bügel **45** rechteckförmigen Querschnitts umspannt, dessen wandabgewandte Oberfläche in Ruhestellung bündig mit der Beschriftungsfläche **53** der Abdeckung **52** abschließt und dessen Schenkel **46** und dessen über die Drehlager **50** hinausragenden Schenkelenden **47** einen Hebel mit einer etwa 3 : 1 -Übersetzung von Schenkel zu Schenkelende bilden. Eine Rückhaltefeder **51** im Drehlager zwischen Schenkel und Gehäuseunterteil hält in Ruhestellung den Bügel gegen den Anschlag **42** gespannt (nicht dargestellt). Im steckdosengesteckten Zustand liegen die wandzugewandten Flächen des Bügels und der Kabelführung **43** parallel zu der Oberfläche der Abdeckrahmens **81** der Steckdose **8**. Dabei liegen insbesondere zwei leicht konvex herausragende Gleitflächen **48** der Schenkelenden des Bügels dicht an der Rahmenoberfläche. An der höchsten, wandzugewandten Erhebung des Bügels weist derselbe eine Griffmulde **49** auf; ein Zug an dieser Stelle bewirkt bei dem steckdosengesteckten Flachnetzstecker **1** mittels Hebelwirkung über das Drehlager eine Druckkraft über die Schenkelenden und die Gleitflächen auf die Rahmenoberflächen aus und veranlassen damit ein Ziehen des Steckers aus der Steckdose bis in die Entnahmestellung. **Fig. 1 b)** zeigt den Flachnetzstecker in perspektivische Darstellung in der Entnahmestellung.

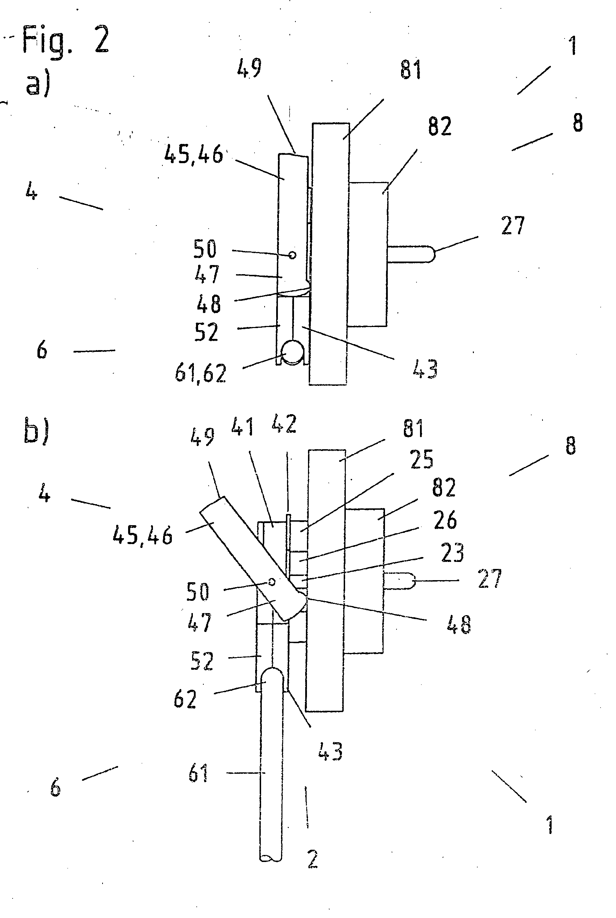

**Fig. 2** zeigt den Flachnetzstecker **1** mit Steckdose **8** in Seitenansicht unter **Fig. 2 a)** in Ruhestellung und in **Fig. 2 b)** in Entnahmestellung. Einerseits zeigt die Seitenansicht deutlich die Parallelität der Lage von Flachnetzstecker und Abdeckrahmen **81** in der Ruhestellung mit dem seitlichen Kabelauslaß **6, 61, 62** sowie die Lage des Steckerteils **2** in der Steckeraufnahme **82** der Steckdose und zum anderen die Hebelwirkung des Bügels **45** über die Gleitfläche **48** des Schenkelendes **47** auf den Abdeckrahmen in der Entnahmestellung. Hier ist das Netzanschlußkabel nach unten ausgeführt. Die ebenen Außenabmessungen Breite und Länge des Flachnetzsteckers liegen deutlich unterhalb der entsprechenden Maße des Abdeckrahmens der Steckdose, so daß auch der Steckereinsatz bei Mehrfach-Steckdosenkombinationen gegeben ist. Ebenso ist die Steckrichtung des Steckers wahlfrei.

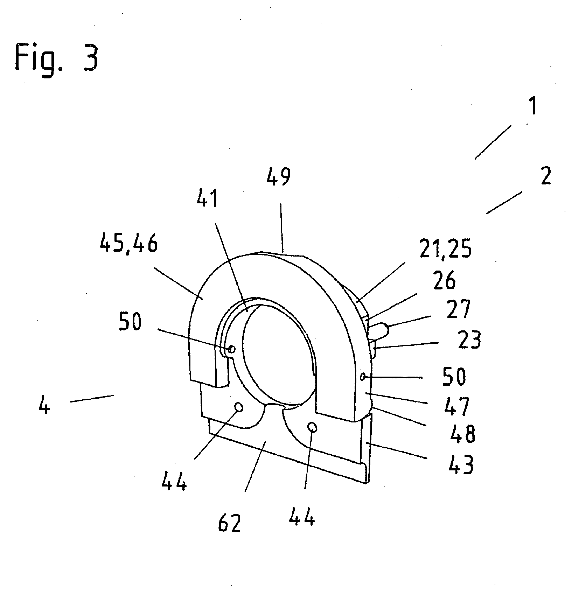

**Fig. 3** zeigt den Flachnetzstecker **1** mit dem Steckerteil **2** und dem Steckergehäuse **4** ohne die Abdeckung **52** in perspektivischer Darstellung. Diese Figur verdeutlicht die Ausprägung des Gehäuseunterteils **41** und die mechanische Verbindung zum Bügel **45** über das Drehlager **50**. Weiterhin wird die Ausgestaltung der Kabelführung **43** deutlich, die mit der spiegelsymmetrisch ausgeprägten Abdeckung **52** in diesem Bereich Kabelführung und Zugentlastung **62** für das Anschlußkabel **61** bildet. Die Abdeckung wird über die Bohrungen **44** mit der Kabelführung verschraubt; diese Verschraubung bildet auch die Zugentlastung für das Netzkabel.

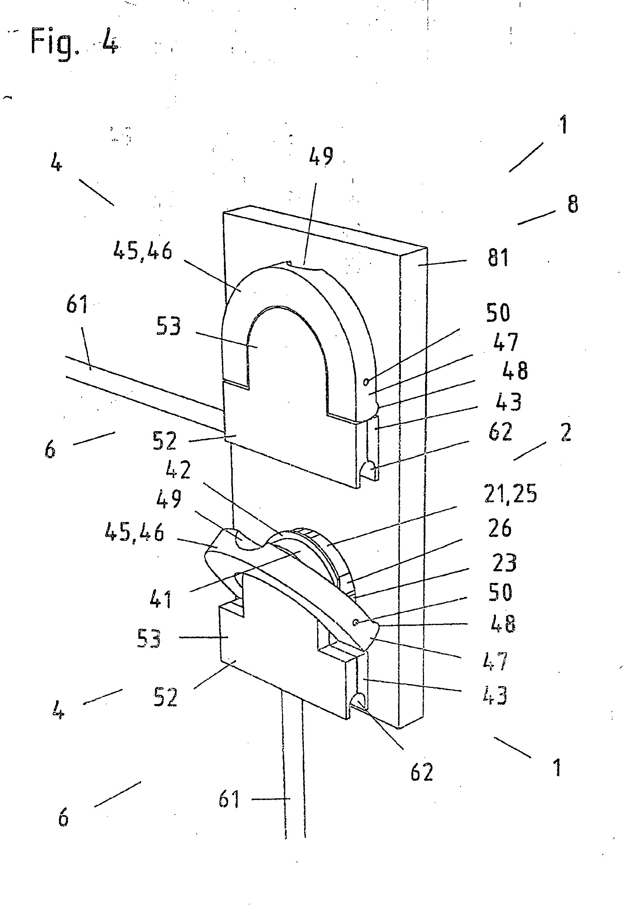

**Fig. 4** zeigt den Flachnetzstecker **1** mit Steckergehäuse **4** und in einer Mehrfach-Steckdosenkombination **81** in der oberen Steckposition in Ruhestellung mit seitlichem Kabelauslaß **61** und in der unteren Steckposition in Entnahmestellung mit Steckerteil **2** und Kabelauslaß nach unten.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

### Bezugszeichenliste

- 1: Flachnetzstecker

- 2: Steckerteil
- 21: Grundkörper
- 22: Schlitz
- 23: Führung
- 24: Topfboden
- 25: Topfwand
- 26: Abflachung
- 27: Kontakt-, Steckerstift
- 28: Erdungs-, Schutzleiterbügel

- 4: Steckergehäuse
- 41: Gehäuseunterteil
- 42: Anschlag
- 43: Kabelführung
- 44: Bohrung
- 45: Bügel, Hebel
- 46: Schenkel
- 47: Schenkelende
- 48: Gleitfläche
- 49: Griffmulde
- 50: Drehlager
- 51: Rückhaltefeder (nicht dargestellt)
- 52: Abdeckung
- 53: Beschriftungsfläche

- 6: Geräte-, Netzkabel
- 61: Anschlußkabel
- 62: Kabelführung, Zugentlastung
- 63: Befestigungsschraube (nicht dargestellt)

- 8: Steckdose, Unterputz
- 81: Abdeckrahmen, n-fach
- 82: Steckeraufnahme

## Patentansprüche

1. Komfort-Flachstecker (1) - insbesondere Netzstecker für die Haushalts- und Werkstattgerätetechnik in flacher Ausführung, mit Bedienkomfort und ausgelegt auch für mehrfach angeordnete Steckdosen (8), bestehend aus einem hohlzylinderförmigen Steckerteil (2) und einem sich auf der wandabgewandten Seite sich fortsetzenden, mit diesem einstückig mit Werkzeug lösbar verbunden, ebenfalls zylinderförmigen Gehäuseunterteil (41) als Teil des Steckergehäuses (4), wobei
- das Gehäuseunterteil ein hufeisenförmiger, im Querschnitt rechteckig als Hebel ausgebildeter Bügel (45) umgibt, **dadurch gekennzeichnet, daß**
- der Bügel auf Höhe der elektrischen Kontakt- oder Steckerstifte (27) in radialer Richtung sich diametral gegenüberstehend, beidseitig drehbar mit dem Gehäuseunterteil verbunden ist,
- der Bügel an seiner am weitesten von den Drehlagern (50) entfernten Stelle eine Griffmulde (49) aufweist, und
- beide Schenkelenden (47) des Bügels in der griffmuldenabgewandten Richtung einen Abstand zum Drehlager bilden, der etwa ein Drittel des Abstands der Griffmulde zum Drehlager beträgt.

2. Komfort-Flachstecker als Netzstecker für die Gerätetechnik nach Anspruch 1, **dadurch gekennzeichnet, daß**
- mindestens ein Drehlager (50) zwischen Gehäuseunterteil (41) und Bügel (45) eine den Bügel in Ruhestellung gegen einen Anschlag (42) des Gehäuseunterteils spannende Rückhaltefeder (51) besitzt.

3. Komfort-Flachstecker als Netzstecker für die Gerätetechnik nach mindestens einem der Ansprüche 1 und 2, **dadurch gekennzeichnet, daß**
- sich das Gehäuseunterteil (41) des Steckergehäuses (4) unterhalb des Steckerteils (2) als eine mittensymmetrisch zu den Kontakt- und Steckerstiften (27) in radialer Richtung rechteckfömig ausgedehnte Kabelführung (43) fortsetzt.

4. Komfort-Flachstecker als Netzstecker für die Gerätetechnik nach Anspruch 3, **dadurch gekennzeichnet, daß**
- sich die Kabelführung (43) des Gehäuseunterteils (41) auf seiner wandabgewandten Seite durch in radialer Richtung verlaufende viertelkreisförmige Aussparungen als Kabelauslässe (62) auszeichnet,
- das Gehäuseunterteil (41) des Steckergehäuses (4) - einschließlich Kabelführung (43) - mit einer dichtenden und isolierenden und bündig mit der in Bügelruhestellung wandabgewandten Bügelfläche (45, 46) abschließenden Abdeckung (52) vollflächig lösbar verbunden ist und
- die Abdeckung (52) auf ihrer wandzugewandten Seite in spiegelsymmetrischer Form die in radialer Richtung verlaufenden viertelkreisförmigen Kabelauslässe (62) der Kabelführung (43) des Gehäuseunterteils (41) aufweist und zusammen mit diesen einen halbkreisförmigen Kabelkanal ergibt.

5. Komfort-Flachstecker als Netzstecker für die Gerätetechnik nach Anspruch 4, **dadurch gekennzeichnet, daß**
- die Kabelführung (43) des Gehäuseunterteils (41) mehrere mittensymmetrisch zu den Kontakt- und Steckerstiften (27) liegende axiale Senkbohrungen (44) zur Schraubenaufnahme (63) und zur einstückigen, lösbaren Verbindung von Kabelführung (43), Abdeckplatte (52) und dazwischen angeordnetem, zugentlasteten gemantelten Netzanschlußkabel (61) aufweist.

6. Komfort-Flachstecker als Netzstecker für die Gerätetechnik nach mindestens einem der Ansprüche 4 und 5, **dadurch gekennzeichnet, daß**
- die wandabgewandte Fläche der Abdeckung (52) eine Ebene aufweist, die sich für Beschriftungen, wie Bedienungsanleitungen oder Zertifizierungskennzeichen, oder auch für werbliche Zwecke eignet.

7. Komfort-Flachstecker als Netzstecker für die Gerätetechnik nach mindestens einem der Ansprüche 4 bis 6, **dadurch gekennzeichnet, daß**
- die radial gerichteten Außenabmessungen des Komfort-Flachsteckers (1) mit dem Steckerteil (2), dem Steckergehäuse (4) mit dem Gehäuseunterteil (41), der Kabelführung (43), der Abdeckung 52 und dem Bügel 45 die ebenen Maße des Abdeckrahmens (81) der Steckdose (8) oder die eines n-fach Abdeckrahmens (81) einer Mehrfach-Steckdosenkombination stets unterschreiten.

## Claims

1. A convenient flat connector (1) - in particular a mains connector for household and workshop appliance technology - in a flat embodiment, with ease of operation, and designed also for multiply-arranged sockets (8), consisting of a hollow cylindrically-shaped connector section (2) and a housing subsection (41) as part of the connector housing (4), also cylindrically-shaped, extending on the side facing away from the wall, connected with the connector section and integrally detachable with the latter with a tool, wherein a horseshoe-shaped strap (45), designed in cross-section in a rectangular manner as a lever, surrounds the housing subsection,
**characterised in that**
- the strap, located at the height of the electrical contact or connector pins (27), in a radial direction diametrically opposite, is connected on both sides with the housing subsection such that it can rotate,
- at its point furthest removed from the pivot bearings (50) the strap has a grip recess (49), and
- in the direction facing away from the grip recess, both arm ends (47) of the strap are located a distance from the pivot bearings that is approximately a third of the distance of the grip recess from the pivot bearings.

2. The convenient flat connector as a mains connector for appliance technology in accordance with claim 1, **characterised in that**
- at least one pivot bearing (50) possesses a retention spring (51) between the housing subsection (41) and the strap (45), which in the inoperative position tensions the strap against a stop (42) of the housing subsection.

3. The convenient flat connector as a mains connector for appliance technology in accordance with at least one of the claims 1 and 2, **characterised in that**
- the housing subsection (41) of the connector housing (4) continues below the connector section (2) as a cable guide (43), extended as a rectangular shape in the radial direction symmetrically with the centre of the contact and connector pins (27).

4. The convenient flat connector as a mains connector for appliance technology in accordance with claim 3, **characterised in that**
- the cable guide (43) of the housing subsection (41), on its side facing away from the wall, features quarter circle-shaped recesses running in the radial direction as cable outlets (62),
- the housing subsection (41) of the connector housing (4) - including the cable guide (43) - is connected in a detachable manner over its full surface with a cover (52), which in a sealing and insulating manner closes flush with the strap surface (45, 46), which in the strap inoperative position is facing away from the wall, and
- the cover (52) has on its side facing towards the wall in a mirror-symmetrical form the quarter circle-shaped cable outlets (62) running in the radial direction of the cable guide (43) of the housing subsection (41), and together with the latter forms a semicircular-shaped cable passage.

5. The convenient flat connector as a mains connector for appliance technology in accordance with claim 4, **characterised in that**
- the cable -guide (43) of the housing subsection (41) has a plurality of axial recessed holes (44) located symmetrically with the centre of the contact and connector pins (27) for purposes of accommodating screws (63) and for purposes of integrally connecting in a detachable manner cable guide (43), cover plate (52) and a strain-relieved, jacketed, mains connection cable (61) arranged in between.

6. The convenient flat connector as a mains connector for appliance technology in accordance with at least one of the claims 4 and 5, **characterised in that**
- the surface of the cover (52) facing away from the wall has a plane, which is suitable for inscriptions, such as operating instructions, or certification marks, or also for promotional purposes.

7. The convenient flat connector as a mains connector for appliance technology in accordance with at least one of the claims 4 to 6, **characterised in that**
- the radially-directed outer dimensions of the convenient flat connector (1) with the connector section (2), the connector housing (4) with the housing subsection (41), the cable guide (43), the cover (52), and the strap (45), are always less than the planar dimensions of the cover frame (81) of the socket (8), or those of an n-multiple cover frame (81) of a multiple socket combination.

## Revendications

1. Fiche plate de confort (1), en particulier fiche de secteur de conception plate pour la technique des appareils domestiques et des ateliers, avec un confort d'utilisation et étudiée également pour des prises de courant (8) disposées de manière multiple, se composant d'un élément de fiche mâle (2) en forme de cylindre creux et d'une partie inférieure de boîtier (41), également en forme de cylindre creux, se prolongeant du côté tournant le dos au mur et formée d'un seul tenant, de manière détachable avec un outil, avec celui-ci, en tant que partie du boîtier de fiche mâle (4), dans laquelle la partie inférieure de boîtier entoure un arceau (45) en forme de fer à cheval, rectangulaire en section transversale, réalisé en tant que levier,
**caractérisée en ce que**
- l'arceau est relié de manière rotative des deux côtés à la partie inférieure de boîtier à la hauteur des fiches ou pointes de contact (27) diamétralement en vis-à-vis entre elles en direction radiale,
- l'arceau présentant une poignée concave (49) à son endroit le plus éloigné des coussinets de pivotement (50), et
- les deux extrémités de branche (47) de l'arceau formant un espacement par rapport au coussinet de pivotement dans la direction tournant le dos à la poignée concave, lequel est sensiblement de l'ordre d'un tiers de l'espacement entre la poignée concave et le coussinet pivotant.

2. Fiche plate de confort en tant que fiche de secteur pour la technique des appareils selon la revendication 1, **caractérisée en ce que**
- au moins un coussinet de pivotement (50) entre la partie inférieure de boîtier (41) et l'arceau (45) possède un ressort de retenue (51) contraignant l'arceau dans la position de repos contre une butée (42) de la partie inférieure de boîtier.

3. Fiche plate de confort en tant que fiche de secteur pour la technique des appareils selon l'une au moins des revendications 1 et 2, **caractérisée en ce que**
- la partie inférieure de boîtier (41) du boîtier de fiche mâle (4) se prolonge en-dessous de l'élément de fiche mâle (2) en tant que cheminement de câblage (43) à extension rectangulaire en direction radiale, en symétrie centrale par rapport aux fiches ou pointes de contact (27).

4. Fiche plate de confort en tant que fiche de secteur pour la technique des appareils selon la revendication 3, **caractérisée en ce que**
- le cheminement de câblage (43) de la partie inférieure de boîtier (41) se distingue, sur son côté tournant le dos au mur, par des évidements en forme de quart de cercle s'étendant en direction radiale en tant que sorties de câbles (62),
- la partie inférieure de boîtier (41) du boîtier de fiche mâle (4) - y compris le cheminement de câblage (43) - étant reliée de manière détachable, sur toute la surface, à un recouvrement (52) d'étanchéification et d'isolation et se terminant en affleurement avec la surface d'arceau (45, 46) tournant le dos au mur en position de repos de l'arceau, et
- le recouvrement (52) présentant, sur son côté tourné vers le mur, en forme de symétrie spéculaire, les sorties de câbles en forme de quart de cercle (62) s'étendant en direction radiale du cheminement de câblage (43) de la partie inférieure de boîtier (41) et formant, ensemble avec celles-ci, un conduit de câble en forme de demi-cercle.

5. Fiche plate de confort en tant que fiche de secteur pour la technique des appareils selon la revendication 4, **caractérisée en ce que**
- le cheminement de câblage (43) de la partie inférieure de boîtier (41) présente plusieurs contre-perçages (44) axiaux situés en symétrie centrale par rapport aux fiches ou pointes de contact (27) pour la réception de vis (63) et pour la connexion d'un seul tenant, de manière détachable, du cheminement de câblage (43), d'une plaque de couverture (52), et d'un câble de raccordement au réseau (61) revêtu, sans contrainte de traction, disposé entre.

6. Fiche plate de confort en tant que fiche de secteur pour la technique des appareils selon l'une au moins des revendications 4 et 5, **caractérisée en ce que**
- la surface du recouvrement (52) tournant le dos au mur présente un plan qui convient pour des inscriptions telles que des modes d'emploi ou des marques de certification ou également pour des buts publicitaires.

7. Fiche plate de confort en tant que fiche de secteur pour la technique des appareils selon l'une au moins des revendications 4 à 6, **caractérisée en ce que**
- les dimensions extérieures orientées radialement de la fiche plate de confort (1) avec l'élément de fiche mâle (2), le boîtier de fiche mâle (4) avec la partie inférieure de boîtier (41), le cheminement de câble (43), le recouvrement (52) et l'arceau (45) dépassent toujours par le bas les dimensions planes du cadre de couverture (81) de la prise de courant (8) ou bien celles d'un n-ème cadre de couverture (81) d'une combinaison de prises de courant multiples.
